# EUROPÄISCHE PATENTSCHRIFT

(11) **EP 1 417 155 B1**
(45) Veröffentlichungstag und Bekanntmachung des Hinweises auf die Patenterteilung: **16.05.2007**
(21) Anmeldenummer: 02760277.0
(22) Anmeldetag: 26.07.2002
(51) Int. Cl.: C03B 9/41

(54) **ELEKTRONISCHE STEUERUNG FÜR GLASFORMMASCHINEN**
ELECTRONIC CONTROL FOR GLASS MOULDING MACHINES
COMMANDE ELECTRONIQUE DESTINEE A DES MACHINES DE MOULAGE DE VERRE

(30) Priorität: 16.08.2001 DE 10140271
(43) Veröffentlichungstag der Anmeldung: 12.05.2004
(73) Patentinhaber: Heye International GmbH, 31683 Obernkirchen (DE)
(72) Erfinder: HARTMANN, Thomas, 31675 Bückeburg (DE); WINKELHAKE, Dirk, D31688 Nienstädt (DE)
(74) Vertreter: Callies, Rainer Michael
(86) Internationale Anmeldenummer: PCT/EP2002/008313
(87) Internationale Veröffentlichungsnummer: WO 2003/016229

(56) Entgegenhaltungen:
- EP-A- 0 683 141

## Beschreibung

Die Erfindung betrifft eine elektronische Steuerung nach dem Oberbegriff des Anspruchs 1.

Bei einer bekannten Steuerung dieser Art (EP 0 603 011 B1) sind alle Controller der Glasformmaschine mit einer gemeinsamen Synchronisations-Signalleitung und außerdem miteinander durch eine einseitig gerichtete Haltleitung, durch ein LAN (Local Area Network), durch eine bidirektionale Wartungshaltleitung und durch eine parallel verteilende Übergangssignalleitung verbunden. Einer der Controller hat die zusätzliche Aufgabe, alle übrigen Controller zu kontrollieren. Der Aufwand ist hoch, und die Wirksamkeit ist begrenzt.

Aus der US 4 685 947 A ist es an sich bekannt, die Controller der Mechanismen jeder Sektion der Glasformmaschine durch einen Sektionscontroller zu steuern. Alle Sektionscontroller werden durch einen gemeinsamen Überwachungscontroller überwacht. Ein zusätzlicher Maschinencontroller ist mit sämtli-, chen Controllern und mit dem Überwachungscontroller verbunden. Auch hier sind der bauliche und der Verdrahtungsaufwand erheblich.

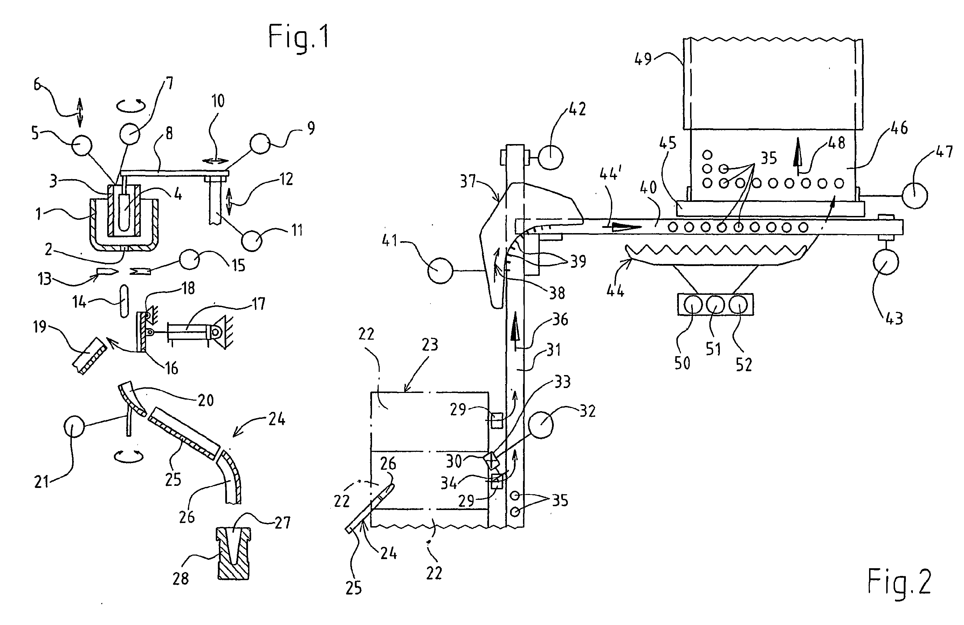

Gemäß der älteren Anmeldung mit der Veröffentlichungs-Nr. EP 1 184 754 A2 werden eine vollständige I.S.-Glasformmaschine sowie periphere Einrichtungen, wie der vorgeschaltete Tropfenspeiser, und nachgeschaltete Einrichtungen am sogenannten "heißen Ende" durch ein gemeinsames Steuersystem gesteuert. Zwei Ausführungsbeispiele sind dafür offenbart. In Fig. 2 weist das Steuersystem eine einzige zentrale Steuereinheit auf, die über einen seriellen CAN-Bus (Feldbus) mit mehreren intelligenten peripheren Einheiten verbunden ist. Jede periphere Einheit ist außerdem mit einem pneumatischen oder elektrischen Antrieb oder mit einem Sensor verbunden und steuert diese Antriebe oder empfängt Informationen von den elektrischen Antrieben oder den Sensoren zu lokaler Verarbeitung. Diese Architektur des Steuersystems ist aufwändig. Störungen an oder der Ausfall der zentralen Steuereinheit führen zu Beeinträchtigungen oder zur Stillsetzung der gesamten Produktionsanlage.

Bei dem anderen Ausführungsbeispiel gemäß Fig. 3 der älteren EP 1 184 754 A2 weist das Steuersystem drei zueinander parallel geschaltete Zentraleinheiten auf, die jeweils mit einem gemeinsamen Haupt-CAN-Bus verbunden sind. Jede Zentraleinheit ist ferner über einen eigenen Unter-CAN-Bus mit einer Gruppe intelligenter peripherer Einheiten verbunden. Die erste Gruppe steuert alle Elektromotoren der gesamten I.S.-Glasformmaschine, die zweite Gruppe steuert pneumatische Formbewegungen der gesamten I.S.-Glasformmaschine und die dritte Gruppe dient der Überprüfung von Zubehör der Produktionsanlage. Diese Architektur ist noch aufwändiger. Störungen an oder der Ausfall einer Zentraleinheit führen zu Beeinträchtigungen der gesamten I.S.-Glasformmaschine. Die peripheren Einheiten können nicht auf direktem Wege miteinander kommunizieren (z.B. zur gegenseitigen Synchronisation).

Aus der EP 1 122 218 A2 ist es an sich bekannt, Prüfvorrichtungen am heißen Ende hinter einer I.S.-Glasformmaschine jeweils über eine bidirektionale Leitung an den Verteiler (hub) eines Sternnetzes anzuschließen. Die Hardware sorgt dafür, dass die an den Verteiler angeschlossenen CAN-Teilnehmer elektrisch eine serielle Struktur aufweisen.

Eine elektronische Steuerung nach dem Oberbegriff des Anspruchs 1 ist aus EP 0 683 141 bekannt.

Der Erfindung liegt die Aufgabe zugrunde, die Steuerung der Glasformmaschine zu vereinfachen und flexibler zu gestalten.

Diese Aufgabe ist durch die Merkmale des Anspruchs 1 gelöst. Dadurch sind praktisch alle Funktionen der wenigstens einen Glasformmaschine vernetzt steuerbar. Mit dem Bussystem wird bewusst das bekannte Master-Slave-System verlassen und ein nachrichtenorientiertes System geschaffen. So sind eine sehr schnelle Einspeisung von Nachrichten und ein ebenso schneller Zugriff von allen Seiten auf diese Nachrichten ermöglicht.

Vorteilhafte Ausgestaltungen der Erfindung sind in den Unteransprüchen gekennzeichnet.

Diese und weitere Vorteile und Merkmale der Erfindung werden nachfolgend anhand der in den Zeichnungen dargestellten Ausführungsbeispiele näher erläutert. Es zeigt
Fig. 1 schematisch einen Tropfenspeiser und Tropfenverteiler einer Glasformmaschine,
Fig. 2 schematisch das sogenannte "Heiße Ende" einer Glasformmaschine,
Fig. 3 einen schematischen Schaltplan für die Steuerung einer Glasformmaschine und
Fig. 4 einen schematischen Schaltplan für die Steuerung einer I.S. (Individual Section)-Glasformmaschine und ihrer Peripherievorrichtungen gemäß den Fig. 1 und 2.

In Fig. 1 enthält ein Speiserkopf 1 schmelzflüssiges Glas, das durch eine Auslassöffnung 2 als Glasstrang austritt. Dieses Austreten wird in an sich bekannter Weise durch einen Drehzylinder 3 und/oder einen Plunger 4 beeinflusst. Der Drehzylinder 3 ist durch einen nur schematisch angedeuteten dritten Antrieb 5 in den Richtungen eines Doppelpfeils 6 heb- und senkbar und durch einen weiteren dritten Antrieb 7 um eine senkrechte Achse drehbar.

Der Plunger 4 ist im Inneren des Drehzylinders 3 angeordnet und von einer Tragvorrichtung 8 gehalten. Die Tragvorrichtung 8 ist durch einen dritten Antrieb 9 in den Richtungen des Doppelpfeils 10 in waagerechter Richtung einstellbar und durch einen weiteren dritten Antrieb 11 in den Richtungen eines Doppelpfeils 12 heb- und senkbar.

Von dem aus der Auslassöffnung 2 austretenden Glasstrang werden periodisch durch eine Tropfenschere 13 Tropfen 14 schmelzflüssigen Glases abgetrennt.

Die Tropfenschere 13 wird durch einen dritten Antrieb 15 angetrieben. Normalerweise passieren die Tropfen 14 in freiem Fall einen Tropfenabweiser 16. Der Tropfenabweiser 16 wird durch einen dritten Antrieb 17 um eine maschinenfeste waagerechte Achse 18 hochgeschwenkt, wenn die Tropfen 14 von schlechter Qualität sind oder vorübergehend nicht weiterverarbeitet werden können. Dann lenkt der Tropfenabweiser 16 die Tropfen 14 in eine Scherbenrinne 19, welche die Tropfen 14 unschädlich einem nicht gezeichneten Scherbenbunker zuführt.

Bei inaktivem Tropfenabweiser 16 fallen die Tropfen 14 auf eine schräg nach unten geneigte Scooprinne 20, die durch einen dritten Antrieb 21 um eine senkrechte Achse schwenkend hin und her antreibbar ist. Typisch versorgt die Scooprinne 20 nacheinander mehrere einzelne Glasformmaschinen, z.B. Sektionen 22 (Fig. 2) einer I.S. (Individual Section)-Glasformmaschine 23. Für jede Sektion 22 ist der Scooprinne 20 ein stationäres Rinnensystem 24 nachgeordnet, das eine nach unten geneigte Langrinne 25 und daran anschließende Endrinne 26 aufweist. Die Endrinne 26 fängt den Tropfen 14 aus der Langrinne 25 auf und lenkt ihn senkrecht nach unten um, damit er in eine Formausnehmung 27 einer nur schematisch angedeuteten Vorform 28 der Sektion 22 fallen kann.

Gemäß Fig. 2 sind in an sich bekannter Weise die Sektionen 22 der I.S.-Glasformmaschine 23 nebeneinander angeordnet. Zur Vereinfachung ist nur ein Rinnensystem 24 eingezeichnet. Es können auch mehrere Rinnensysteme 24 je Sektion 22 vorgesehen sein. In diesem Fall würde die I.S.-Glasformmaschine 23 im sogenannten Mehrfachformbetrieb betrieben, bei dem gleichzeitig mehrere Hohlglasgegenstände je Arbeitszyklus durch eine Sektion 22 hergestellt werden.

Für diese Herstellung weist jede Sektion 22 in an sich bekannter Weise mehrere miteinander zusammenwirkende Mechanismen auf. Solche Sektionen 22 arbeiten bevorzugt im Press-Blas-Verfahren oder im Blas-Blas-Verfahren. Für ein typisches Fertigungsprogramm des Press-Blas-Verfahrens und die dabei tätigen Mechanismen wird auf die DE 32 32 733 C1 der Anmelderin verwiesen.

Ein typisches Fertigungsprogramm nach dem Blas-Blas-Verfahren ist der US 3 905 793 A, Fig. 1, zu entnehmen.

So können also sowohl die im Press-Blas-Verfahren als auch die im Blas-Blas-Verfahren tätigen Mechanismen der Sektionen 22 als grundsätzlich bekannt vorausgesetzt werden. Diese Mechanismen arbeiten im Wesentlichen nacheinander, können sich aber in ihrem Arbeitsablauf auch überlappen. Alle Mechanismen werden durch Antriebe bewegt, deren vorteilhafte Steuerung ein Anliegen der vorliegenden Anmeldung ist.

Die fertigen Hohlglasgegenstände werden letztlich durch einen in Fig. 2 nicht gezeichneten Ausnehmer aus einer geöffneten Fertigform entnommen und auf einer Absetzplatte 29 abgesetzt. Jeder Absetzplatte 29 ist ein Überschieber 30 zugeordnet, der die fertigen Hohlglasgegenstände von der Absetzplatte 29 über einen Kreisbogen von etwa 110° auf ein allen Sektionen 22 gemeinsames Transportband 31 überschiebt. Diese Schwenkung um eine senkrechte Achse erfolgt durch einen dritten Antrieb 32. Bestandteil des Überschiebers 30 ist ein Zylinder 33, der einen Fingerträger 34 für die Hohlglasgegenstände 35 in waagerechter Richtung ausfährt oder einzieht. Zur allgemeinen Funktion solcher Überschieber 30 wird auf die EP 1 026 127 A2 der Anmelderin verwiesen.

Das Transportband 31 transportiert die Hohlglasgegenstände 35 normalerweise in einer Reihe in Richtung eines Pfeils 36 bis zu einer Umlenkvorrichtung 37, die in einer waagerechten Ebene in Richtung eines Pfeils 38 umläuft und die Hohlglasgegenstände 35 mit Fingern 39 ergreift und auf ein quer zu dem Transportband 31 verlaufendes Querband 40 umlenkt. Ein Beispiel für eine solche Umlenkvorrichtung 37 ist der US 5 501 316 A der Anmelderin zu entnehmen. Die Umlenkvorrichtung 37 wird durch einen dritten Antrieb 41 angetrieben. Der Antrieb des Transportbandes 31 erfolgt durch einen dritten Antrieb 42 und der Antrieb des Querbandes 40 durch einen dritten Antrieb 43 in Richtung eines Pfeils 44'.

Die Hohlglasgegenstände 35 werden in aufeinanderfolgenden Gruppen in an sich bekannter Weise durch einen Einschieber 44 bogenförmig von dem Querband 40 über eine Zwischenplatte 45 auf ein Kühlofentransportband 46 geschoben. Das Kühlofentransportband 46 wird durch einen dritten Antrieb 47 in Richtung eines Pfeils 48 angetrieben und transportiert die Hohlglasgegenstände 35 durch einen Kühlofen 49 hindurch.

Der Einschieber 44 wird in an sich bekannter Weise durch drei dritte Antriebe 50 bis 52, die in Fig. 2 nur schematisch angedeutet sind, in drei zueinander rechtwinkligen Achsen bewegt. Einzelheiten dazu sind z.B. der DE 40 22 110 C2 der Anmelderin zu entnehmen.

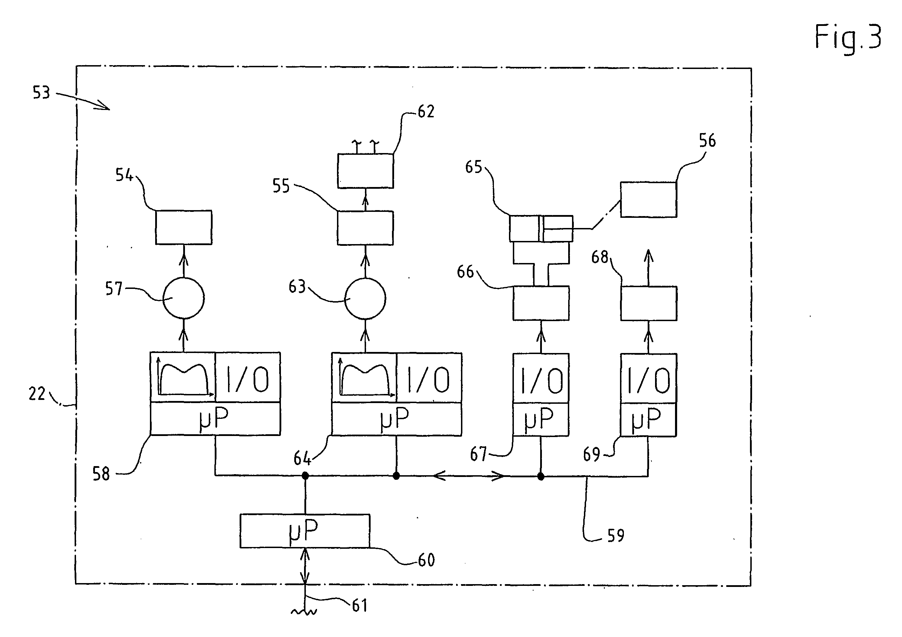

Fig. 3 zeigt schematisch einen Schaltplan für einen Teil einer elektronischen Steuerung 53 einer Sektion 22. Stellvertretend für die Vielzahl der Mechanismen der Sektion 22 sind in Fig. 3 Mechanismen 54 bis 56 schematisch angedeutet. Bei dem Mechanismus 54 kann es sich z.B. um einen Formöffnungs- und Formschließmechanismus handeln. Er wird durch einen ersten Antrieb 57 mit programmierbarem Bewegungsprofil angetrieben. Der erste Antrieb 57 ist mit einem ersten Controller 58 verbunden, der an einen ersten Bus 59 angeschlossen ist. Der erste Bus 59 ist über einen ersten Sequenzer 60 mit einer Verbindungsleitung 61 verbunden.

Bei dem Mechanismus 55 kann es sich z.B. um einen Invert/Revertmechanismus handeln. In Abhängigkeit von der Betriebsstellung des Mechanismus 55 kann ein erstes Ventil 62, z.B. zur Kühlluftversorgung, ein- und ausgeschaltet werden. Der Mechanismus 55 wird durch einen ersten Antrieb 63 mit programmierbarem Bewegungsprofil angetrieben. Der erste Antrieb 63 ist über einen ersten Controller 64 mit dem ersten Bus 59 verbunden. Die ersten Antriebe 57, 63 sind vorzugsweise als Elektroservomotoren, z.B. als bürstenlose Drehstrom-Synchronservomotoren, ausgebildet.

Bei dem Mechanismus 56 kann es sich z.B. um einen beim Press-Blasen verwendeten Pressstempel oder einen beim Blas-Blasen verwendeten Pegel handeln. Der Mechanismus 56 wird durch einen als Kolben-Zylinder-Einheit ausgebildeten zweiten Antrieb 65 angetrieben. Der zweite Antrieb 65 wird durch ein zweites Ventil 66 gesteuert, das über einen ersten Controller 67 mit dem ersten Bus 59 verbunden ist.

In Fig. 3 ist ferner ein drittes Ventil 68 eingezeichnet, das z.B. die Kühlluftzufuhr zu Formteilen steuert. Das dritte Ventil 68 ist über einen ersten Controller 69 mit dem ersten Bus 59 verbunden. Jeder erste Controller 58, 64, 67, 69 weist einen Mikroprozessor auf, der im Fall der ersten Controller 58, 64 jeweils einen Umrichter für die ersten Antriebe 57, 63 steuert.

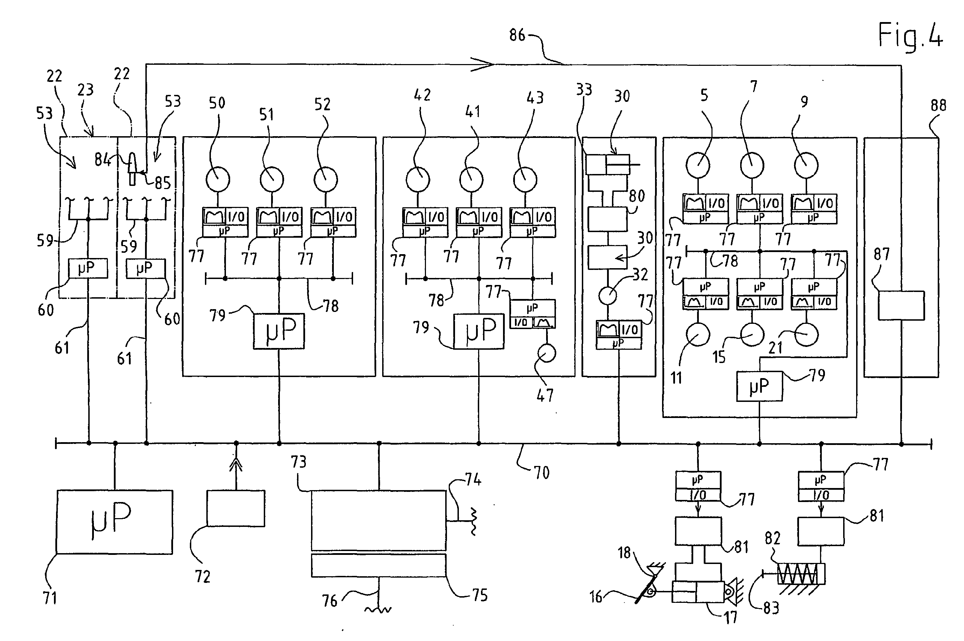

In dem Schaltbild gemäß Fig. 4 sind links zwei Sektionen 22 der I.S.-Glasformmaschine 23 entsprechend Fig. 3 angedeutet. Die Verbindungsleitungen 61 der elektronischen Steuerungen 53 dieser Sektionen 22 sind mit einem zweiten Bus 70 verbunden und bilden Bestandteile des zweiten Busses 70. Außer den beiden in Fig. 4 gezeichneten Sektionen 22 sind selbstverständlich auch alle übrigen Sektionen der I.S.-Glasformmaschine 23 mit ihren elektronischen Steuerungen 53 in dieser Weise an den zweiten Bus 70 angeschlossen.

Mit dem zweiten Bus 70 sind außerdem ein zweiter Sequenzer 71, ein Handbediengerät 72 und ein PC 73 verbunden. Der PC 73 kann über eine Leitung 74 an ein externes Netzwerk, z.B. das Internet, angeschlossen werden. Über ein Modem 75 kann der PC 73 ferner an ein Fernsprechnetz 76 angeschlossen werden.

Gemäß Fig. 4 sind die dritten Antriebe 50 bis 52 des Einschiebers 44 (Fig. 2) jeweils über einen zweiten Controller 77 mit einem dritten Bus 78 verbunden, der seinerseits über einen dritten Sequenzer 79 an den zweiten Bus 70 angeschlossen ist.

In der gleichen Weise sind die dritten Antriebe 5, 7, 9, 11, 15, 21, 41, 42, 43 und 47 an den zweiten Bus 70 angeschlossen.

Auch der dritte Antrieb 32 jedes Überschiebers 30 ist gemäß Fig. 4 über einen zweiten Controller 77 mit dem zweiten Bus 70 verbunden. In Abhängigkeit von der Schwenkstellung des Zylinders 33 um die senkrechte Achse wird ein viertes Ventil 80 geschaltet, das den Zylinder 33 steuert. Zur Vereinfachung ist in Fig. 4 nur ein Überschieber 30 schematisch dargestellt, obwohl bekanntlich jede Sektion 22 einen solchen Überschieber 30 besitzt.

An den zweiten Bus 70 ist außerdem über einen zweiten Controller 77 ein fünftes Ventil 81 angeschlossen, das den dritten Antrieb 17 des Tropfenabweisers 16 (siehe auch Fig. 1) steuert.

An den zweiten Bus 70 ist rechts unten in Fig. 4 ein weiterer zweiter Controller 77 angeschlossen, der ein fünftes Ventil 81 für einen als Zylinder ausgebildeten dritten Antrieb 82 eines Auswerfers 83 für defekte Hohlglasgegenstände 35 (Fig. 2) steuert.

In Fig. 4 ist in der rechten Sektion 22 schematisch ein Pressstempel 84 angedeutet, dem ein Sensor 85 zugeordnet ist. Als Beispiel für einen solchen Sensor 85 wird auf die US 5 644 227 A der Anmelderin verwiesen. In jedem Betriebszyklus der Sektion 22 erzeugt der Sensor 85 ein der maximalen Eindringtiefe des Pressstempels 84 in die zugehörige Vorform 28 (Fig. 1) entsprechendes Signal. Dieses Signal wird in Fig. 4 über eine gesonderte Signalleitung 86 einer Steuerung 87 einer Prozesskontrolleinrichtung 88 zugeführt. Das jeweilige Signal verkörpert also die jeweilige Eindringtiefe des Pressstempels 84 in die Vorform 28 und ist damit ein Maß für die Glasmasse des Tropfens 14. Der Steuerung 87 werden aus einem Datenspeicher des PCs 73 über den zweiten Bus 70 für den jeweils hergestellten Hohlglasgegenstand 35 (Fig. 2) obere und untere Sollwerte für die Pressstempeleindringtiefe und damit die Glasmasse des Tropfens 14 übermittelt. Sobald die tatsächliche Pressstempelstellung sich aus dem Sollbereich entfernt, werden diese Informationen einerseits von der Steuerung 87 über den zweiten Bus 70 an den Auswerfer 83 gegeben, um entsprechend fehlerhaft produzierte Hohlglasgegenstände 35 zu entfernen, und andererseits ebenfalls über den zweiten Bus 70 Regelsignale in den zweiten Controller 77 des dritten Antriebs 11 gegeben, um den Hub 12 (Fig. 1) des Plungers 4 anzupassen.

Damit ist also eine elektronische Gesamtsteuerung sowohl für die einzelnen Sektionen 22 der 1.S.-Glasformmaschine 23 als auch für deren Peripherievorrichtungen geschaffen. Diese Gesamtsteuerung macht sich in vorteilhafter Weise Busse zu Nutze. Dabei kann es sich um multi-master-fähige und nachrichtenorientierte Busse, z.B. um CAN-Busse, handeln. Alle Steuerbefehle zwischen den Controllern, auch sicherheitsgerichtete, können über das Bussystem übertragen werden, sofern z.B. das CANSafety, oder ein anderes von der BIA zugelassenes Protokoll verwendet wird. Ein solches Protokoll kann auch nur zwischen einer Untermenge der Controller, z.B. den Controllern für den Tropfenabweiser 16 und die Scooprinne 20, verwendet werden.

Alle Antriebe sind auch ohne den PC 73 und das Handbediengerät 72 einzeln produktionsfähig, Parameter können dann aber nicht verstellt werden. Parameter können nur vom PC 73 geändert werden. Die Adressen der einzelnen Antriebe werden über DIP-Schalter oder per Software konfiguriert. Alle gewünschten Parameter können auch vom Handbediengerät 72, das insbesondere am Transportband 31 (Fig. 2) kontaktiert werden oder drahtlos übertragen kann, geändert werden. Im PC 73 werden die Meldungen zentral verwaltet, und es kann gezielt auf jede Sektion 22 und dort auf einen speziellen Antrieb zugegriffen werden. Im PC 73 werden alle Parameter zentral verwaltet und archiviert. Von dem PC 73 wird keinerlei Echtzeitfähigkeit gefordert. Der PC dient als Adressumsetzer zwischen dem Handbediengerät 72 und den einzelnen Antrieben.

Der PC 73 ist außerdem die Basis der Anlagenvisualisierung. Die Software des PCs 73 wird z.B. mit dem CBuilder oder einem ähnlichen Werkzeug programmiert, und die Daten werden in einer allgemeinen Datenbankstruktur abgelegt. Über den zweiten Bus 70 können dann alle Servoantriebe parametriert werden. Aber auch alle anderen Antriebe können über das Bussystem an diesen Visualisierungs-PC 73 angeschlossen werden.

Vorteilhaft ist dabei, dass man nur einen Visualisierungs-PC 73 für alle Komponenten benötigt. Alle Parameter, die in den Komponenten verwendet werden, werden in einer zentralen Datenbank in dem PC 73 verwaltet. So sind also keine Doppeleingaben mehr nötig.

Alle Hardwarekomponenten können sich um ihre Kernaufgabe kümmern, während der Echtzeitteil der Anwendung nicht mehr durch den Visualisierungsteil gestört werden kann. Dadurch ist ein wesentlich stabilerer Betrieb mit einfacheren Mitteln zu erreichen. Der Arbeitsaufwand zur Erstellung der Eingabe- und Anzeigemasken sinkt erheblich. Alle Parameter aller Komponenten können komfortabel mit Hilfe des Handbediengeräts 72 von jeder Stelle der Anlage verstellt werden, da das Handbediengerät 72 über das Bussystem an den PC 73 und an alle Komponenten angeschlossen ist und somit Zugriff auf alle Daten hat. Dadurch können sich die Vorort-Bedienstationen auf das Unerlässliche beschränken, was erneut zu Kosteneinsparungen führt.

Da der PC 73 keinerlei Echtzeitaufgaben zu erfüllen hat, kann dort ein Standardbetriebssystem (z.B. Windows® NT) eingesetzt werden. Es stehen dann automatisch alle Standardsoftwaretools zu Verfügung, ohne dass spezielle Softwaretools entwickelt werden müssten. Alle Komponenten, die an den PC 73 angeschlossen sind, können durch das Betriebssystem ferngewartet werden. Dazu kann entweder die Leitung 74 des PCs 73 oder das Modem 75 mit dem angeschlossenen Fernsprechnetz dienen. Auch eine Ferndiagnose ist über diese Kanäle möglich.

## Patentansprüche

1. Steuerung für wenigstens eine Glasformmaschine (22),
wobei jede Glasformmaschine (22) mit einer elektronischen Steuerung (53) und mit mehreren Mechanismen (54; 55; 56) versehen ist und aufweist:
(a) Erste Antriebe (57; 63) mit programmierbarem Bewegungsprofil, wobei jeder erste Antrieb (57; 63) einen der Mechanismen (54; 55) antreibt,
(b) erste Ventile (62), die an vorprogrammierbaren Positionen des Bewegungsprofils gemäß (a) durch einen durch den ersten Antrieb (63) antreibbaren Mechanismus (55) öffenbar und schließbar sind,
(c) zweite Antriebe (65) mit nichtprogrammierbarem Bewegungsprofil, die durch zweite Ventile (66) zu programmierbaren Zeitpunkten betätigbar und stillsetzbar sind, wobei jeder zweite Antrieb (65) einen der Mechanismen (56) antreibt, und
(d) dritte Ventile (68), die zu programmierbaren Zeitpunkten öffenbar und schließbar sind,
wobei jede Glasformmaschine (22) mehrere erste Controller (58; 64; 67; 69) aufweist,
wobei jeder erste Controller (58; 64; 67; 69) mit wenigstens einem der ersten Antriebe (57; 63) oder der zweiten Ventile (66) oder der dritten Ventile (68) verbunden ist,
und wobei jede Glasformmaschine (22) Kontrollmittel (60) zur Kontrolle aller ihrer ersten Controller (58; 64; 67; 69) aufweist,
**dadurch gekennzeichnet, dass** die Kontrollmittel jeder Glasformmaschine (22) einen als Mikroprozessor ausgebildeten ersten Sequenzer (60) aufweisen,
und dass alle ersten Controller (58; 64; 67; 69) der Glasformmaschine (22) über einen ersten Bus (59) mit dem ersten Sequenzer (60) verbunden sind.

2. Steuerung nach Anspruch 1,
**dadurch gekennzeichnet, dass** jeder erste Controller (58; 64; 67; 69) einen Mikroprozessor aufweist.

3. Steuerung nach Anspruch 1 oder 2,
**dadurch gekennzeichnet, dass** jeder erste Antrieb (57; 63) einen Elektroservomotor und einen Umrichter aufweist,
und dass jeder Umrichter durch einen Mikroprozessor des zugehörigen ersten Controllers (58; 64; 67; 69) steuerbar ist.

4. Steuerung nach einem der Ansprüche 1 bis 3,
**dadurch gekennzeichnet, dass** bei mehreren, jeweils durch die elektronische Steuerung (53) gesteuerten Glasformmaschinen (22) jeder erste Sequenzer (60) mit einem zweiten Bus (70) verbunden ist,
und dass an den zweiten Bus (70) ein zweiter Sequenzer (71) angeschlossen ist.

5. Steuerung nach einem der Ansprüche 1 bis 3,
**dadurch gekennzeichnet, dass** jede Glasformmaschine als eine Sektion (22) einer I.S.(Individual Section)-Glasformmaschine (23) ausgebildet ist,
dass alle ersten Sequenzer (60) mit einem allen Sektionen (22) gemeinsamen zweiten Bus (70) verbunden sind,
und dass an den zweiten Bus (70) ein für die Steuerung der gesamten I.S.-Glasformmaschine (23) zuständiger zweiter Sequenzer (71) angeschlossen ist.

6. Steuerung nach Anspruch 4 oder 5,
**dadurch gekennzeichnet, dass** an wenigstens einer Stelle an den zweiten Bus (70) ein Handbediengerät (72) anschließbar ist.

7. Steuerung nach einem der Ansprüche 4 bis 6,
**dadurch gekennzeichnet, dass** an den zweiten Bus (70) ein PC (73) zur Visualisierung und Speicherung aller Steuerungsparameter angeschlossen ist.

8. Steuerung nach Anspruch 7,
**dadurch gekennzeichnet, dass** der PC (73) einen Internetzugang (74) aufweist.

9. Steuerung nach Anspruch 7 oder 8,
**dadurch gekennzeichnet, dass** der PC (73) zu Zwecken der Ferndiagnose und Fernwartung über ein Modem (75) an ein Fernsprechnetz (76) anschließbar ist.

10. Steuerung nach einem der Ansprüche 1 bis 9,
**dadurch gekennzeichnet, dass** die wenigstens eine Glasformmaschine (22) mit Peripherievorrichtungen,
wie z.B. einem heb- und senkbaren und drehbaren Drehzylinder (3) und wenigsten einem heb- und senkbaren und waagerecht einstellbaren Plunger (4) in einem Speiserkopf (1), einer Tropfenschere (13), einem Tropfenabweiser (16), einem Tropfenverteiler (20), einem Überschieber (30), einem Transportband (31), einer Umlenkvorrichtung (37), einem Querband (40), einem Einschieber (44), einem Kühlofentransportband (46), einer die Tropfenmasse regelnden Prozesskontrolleinrichtung (88) und einem Auswerfer (83),
zusammenwirkt,
dass jede Peripherievorrichtung wenigstens einen dritten Antrieb (5; 7; 9; 11; 15; 17; 21; 32; 41; 42; 43; 50, 51, 52; 82) aufweist,
und dass jeder dritte Antrieb mit einem zugehörigen, einen Mikroprozessor aufweisenden zweiten Controller (77) verbunden ist.

11. Steuerung nach Anspruch 10,
**dadurch gekennzeichnet, dass** mehrere zweite Controller (77) mit einem dritten Bus (78) verbunden sind,
und dass ein dritter Sequenzer (79) einerseits an den zweiten Bus (70) und andererseits an den dritten Bus (78) angeschlossen ist.

12. Steuerung nach Anspruch 10,
**dadurch gekennzeichnet, dass** der zweite Controller (77) an den zweiten Bus (70) angeschlossen ist und ein fünftes Ventil (81) steuert, das den zugehörigen dritten Antrieb (17; 82) betätigt.

13. Steuerung nach einem der Ansprüche 1 bis 12,
**dadurch gekennzeichnet, dass** jeder Bus (59;70;78) als CAN-Bus ausgebildet ist.

## Claims

1. Control for at least one glass forming machine (22),
wherein each glass forming machine (22) is provided with an electronic control (53) and with a plurality of mechanisms (54; 55; 56) and has:
(a) first drives (57; 63) with a programmable movement profile, wherein each first drive (57; 63) drives one of the mechanisms (54; 55),
(b) first valves (62) which can be opened and closed at pre-programmable positions of the movement profile in accordance with (a) by means of a mechanism (55) which can be driven by the first drive (63),
(c) second drives (65) with a non-programmable movement profile, which can be activated and shut down by second valves (66) at programmable times, wherein each second drive (65) drives one of the mechanisms (56), and
(d) third valves (68) which can be opened and closed at programmable times,
wherein each glass forming machine (22) has a plurality of first controllers (58; 64; 67; 69),
wherein each first controller (58; 64; 67; 69) is connected to at least one of the first drives (57; 63) or of the second valves (66) or of the third valves (68),
and wherein each glass forming machine (22) has control means (60) for controlling all of its first controllers (58; 64; 67; 69),
**characterized in that** the control means of each glass forming machine (22) have a first sequencer (60) formed as a microprocessor,
and that all first controllers (58; 64; 67; 69) of the glass forming machine (22) are connected to the first sequencer (60) via a first bus (59).

2. Control as claimed in claim 1,
**characterized in that** each first controller (58; 64; 67; 69) has a microprocessor.

3. Control as claimed in claim 1 or 2,
**characterized in that** each first drive (57; 63) has an electric servo motor and a converter,
and that each converter can be controlled by a microprocessor of the associated first controller (58; 64; 67; 69).

4. Controller as claimed in any one of claims 1 to 3,
**characterized in that** in the case of a plurality of glass forming machines (22) controlled respectively by the electronic control (53) each first sequencer (60) is connected to a second bus (70),
and that a second sequencer (71) is connected to the second bus (70).

5. Control as claimed in any one of claims 1 to 3,
**characterized in that** each glass forming machine is formed as a section (22) of an I.S. (Individual Section) glass forming machine (23),
that all first sequencers (60) are connected to a second bus (70) which is common to all sections (22),
and that a second sequencer (71) responsible for the control of the whole I.S. glass forming machine (23) is connected to the second bus (70).

6. Control as claimed in claim 4 or 5,
**characterized in that** a manually-operated device (72) can be connected to the second bus (70) at at least one point.

7. Control as claimed in any one of claims 4 to 6,
**characterized in that** a PC (73) for visualising and storing all control parameters is connected to the second bus (70).

8. Control as claimed in claim 7,
**characterized in that** the PC (73) has an Internet access (74).

9. Control as claimed in claim 7 or 8,
**characterized in that** the PC (73) can be connected via a modem (75) to a telecommunications network (76) for the purposes of remote diagnosis and remote maintenance.

10. Control as claimed in any one of claims 1 to 9,
**characterized in that** the at least one glass forming machine (22) cooperates with peripheral devices,
such as, for example, a rotating cylinder (3), which can be rotated and raised and lowered, and at least one plunger (4), which can be horizontally adjusted and can be raised and lowered, in a feeder head (1), gob shears (13), a gob deflector (16), a gob distributor (20), a pusher (30), a conveyor belt (31), a ware transfer mechanism (37), a transverse belt (40), a stacker (44), a lehr conveyor belt (46), a process control device (88), controlling the gob mass, and an ejector (83),
that each peripheral device has at least one third drive (5; 7; 9; 11; 15; 17; 21; 32; 41; 42; 43; 50, 51, 52; 82),
and that each third drive is connected to an associated second controller (77) having a microprocessor.

11. Control as claimed in claim 10,
**characterized in that** a plurality of second controllers (77) are connected to a third bus (78),
and that a third sequencer (79) is connected on the one hand to the second bus (70) and on the other hand to the third bus (78).

12. Control as claimed in claim 10,
**characterized in that** the second controller (77) is connected to the second bus (70) and controls a fifth valve (81) which actuates the associated third drive (17; 82).

13. Control as claimed in any one of claims 1 to 12,
**characterized in that** each bus (59; 70; 78) is formed as a CANbus.

## Revendications

1. Commande pour au moins une machine à mouler le verre (22), dans laquelle chaque machine à mouler le verre (22) est dotée d'une commande électronique (53) et de plusieurs mécanismes (54 ; 55 ; 56) et possède :
(a) des premiers entraînements (57 ; 63) ayant un profil de déplacement programmable, chaque premier entraînement (57 ; 63) entraînant l'un des mécanismes (54 ; 55),
(b) des premières vannes (62) qui peuvent être ouvertes et fermées dans des positions préprogrammées du profil de déplacement selon (a) par un mécanisme (55) pouvant être entraîné par le premier entraînement (63),
(c) des deuxièmes entraînements (65) à profil de déplacement non programmable, qui peuvent être activés et désactivés par des deuxièmes vannes (66) à des moments programmables, chaque deuxième entraînement (65) entraînant l'un des mécanismes (56), et
(d) des troisièmes vannes (68) pouvant être ouvertes et fermées à des moments programmables,
dans laquelle chaque machine à mouler le verre (22) possède plusieurs premiers contrôleurs (58 ; 64 ; 67 ; 69),
dans laquelle chaque premier contrôleur (58 ; 64 ; 67 ; 69) est relié à au moins un des premiers entraînements (57 ; 63) ou des deuxièmes vannes (66) ou des troisièmes vannes (68),
et dans laquelle chaque machine à mouler le verre (22) possède des moyens de contrôle (60) pour le contrôle de tous ses premiers contrôleurs (58 ; 64 ; 67 ; 69),
**caractérisée en ce que** les moyens de contrôle de chaque machine à mouler le verre (22) possèdent un premier séquenceur (60) conçu comme un microprocesseur,
et **en ce que** tous les premiers contrôleurs (58 ; 64 ; 67 ; 69) de la machine à mouler le verre (22) sont reliés par un premier bus (59) avec le premier séquenceur (60).

2. Commande selon la revendication 1, **caractérisée en ce que** chaque premier contrôleur (58 ; 64 ; 67 ; 69) possède un microprocesseur.

3. Commande selon la revendication 1 ou 2, **caractérisée en ce que** chaque premier entraînement (57 ; 63) possède un servomoteur électrique et un convertisseur, et **en ce que** chaque convertisseur peut être commandé par un microprocesseur du premier contrôleur (58 ; 64 ; 67 ; 69) correspondant.

4. Commande selon l'une des revendications 1 à 3, **caractérisée en ce que** lorsque plusieurs machines de moulage de verre (22) sont commandées par la commande électronique (53), chaque premier séquenceur (60) est relié avec un deuxième bus (70) et **en ce qu'**un deuxième séquenceur (71) est connecté au deuxième bus (70).

5. Commande selon l'une des revendications 1 à 3, **caractérisée en ce que** chaque machine à mouler le verre est conformée comme une section (22) d'une machine à mouler le verre à sections individuelles (I.S.) (23),
**en ce que** tous les premiers séquenceurs (60) sont reliés avec un deuxième bus (70) commun à toutes les sections (22),
et **en ce qu'**un deuxième séquenceur (71) responsable de la commande de l'ensemble de la machine à mouler le verre I.S. (23) est connecté au deuxième bus (70).

6. Commande selon la revendication 4 ou 5, **caractérisée en ce qu'**un appareil de commande manuelle (72) peut être branché en au moins un point du deuxième bus (70).

7. Commande selon l'une des revendications 4 à 6, **caractérisée en ce qu'**un PC (73) peut être connecté au deuxième bus (70) pour visualiser et enregistrer tous les paramètres de commande.

8. Commande selon la revendication 7, **caractérisée en ce que** le PC (73) possède un accès à Internet (74).

9. Commande selon la revendication 7 ou 8, **caractérisée en ce que** le PC (73) peut être raccordé par un modem (75) à un réseau téléphonique (76) aux fins de diagnostic à distance et de maintenance à distance.

10. Commande selon l'une des revendications 1 à 9, **caractérisée en ce que** la machine à mouler le verre (22) au nombre d'une au moins coopère avec des dispositifs périphériques, par exemple un cylindre rotatif (3) pouvant être levé et abaissé et au moins un plongeur (4) pouvant être levé et abaissé et réglable à l'horizontale dans un distributeur (1), une cisaille à paraisons (13), un pare-gouttes (16), un distributeur de paraisons (20), un poussoir (30), une bande de transport (31), un mécanisme de déviation (37), une bande transversale (40), une coulisse d'introduction (44), une bande de transport de four de refroidissement (46), un dispositif de contrôle du processus (88) régulant la masse des paraisons et un éjecteur (83),
**en ce que** chaque dispositif périphérique possède au moins un troisième entraînement (5 ; 7 ; 9 ; 11 ; 15 ; 17 ; 21 ; 32 ; 41 ; 42 ; 43 ; 50 ; 51 ; 82),
et **en ce que** chaque troisième entraînement est relié avec un deuxième contrôleur (77) correspondant, possédant un microprocesseur.

11. Commande selon la revendication 10, **caractérisée en ce que** plusieurs deuxièmes contrôleurs (77) sont reliés à un troisième bus (78),
et **en ce qu'**un troisième séquenceur (79) est connecté d'une part au deuxième bus (70) et d'autre part au troisième bus.

12. Commande selon la revendication 10, **caractérisée en ce que** le deuxième contrôleur (77) est connecté au deuxième bus (70) et commande une cinquième vanne (81) qui actionne le troisième entraînement (17 ; 82) correspondant.

13. Commande selon l'une des revendications 1 à 12, **caractérisée en ce que** chaque bus (59 ; 70 ; 78) est conçu comme un bus CAN.
